Europäisches Patentamt

European Patent Office

Office européen des brevets

(11) Veröffentlichungsnummer : **0 156 925**
**B1**

(12) **EUROPÄISCHE PATENTSCHRIFT**

(45) Veröffentlichungstag der Patentschrift :
29.07.87

(51) Int. Cl.⁴ : **B 01 D 29/44**, B 29 C 47/68

(21) Anmeldenummer : **84100896.4**

(22) Anmeldetag : **28.01.84**

(54) Schmutzfilter für zäh fliessfähige, thermoplastische Medien.

(43) Veröffentlichungstag der Anmeldung :
09.10.85 Patentblatt 85/41

(45) Bekanntmachung des Hinweises auf die Patenterteilung : 29.07.87 Patentblatt 87/31

(84) Benannte Vertragsstaaten :
AT BE CH DE FR GB IT LI NL SE

(56) Entgegenhaltungen :
EP-A- 0 010 338
GB-A- 2 054 399

(73) Patentinhaber : Odenwälder Kunststoffwerke GmbH
Industriegelände
D-6967 Buchen/Odenwald (DE)

(72) Erfinder : Dörsam, Karl-Heinz
Gänsäckerstrasse 14
D-6967 Buchen-Bödigheim (DE)

(74) Vertreter : Hach, Hans Karl, Dr.
Tarunstrasse 23
D-6950 Mosbach-Waldstadt (DE)

**Beschreibung**

Die Erfindung betrifft ein Schmutzfilter für zäh fließfähige, thermoplastische Medien mit einem in einem Gehäuse ausgesparten Filterraum, in dem ein Sperrkörper sitzt ; mit einer im Gehäuse ausgesparten Zuleitung, die mit kreisrundem Querschnitt koaxial zu einer Flußachse in den Filterraum mündet ; mit einer im Gehäuse ausgesparten Ableitung, die mit kreisrundem Querschnitt koaxial zur Flußachse auf der der Mündung der Zuleitung gegenüberliegenden Seite vom Filterraum ausgeht ; wobei der Filterraum und der Sperrkörper rotationssymetrisch zur Flußachse und glatt ausgestaltet sind und wobei der Innendurchmesser des Filterraums, gemessen senkrecht zur Flußachse, überall größer ist als der entsprechend auf gleicher axialer Höhe gemessene Außendurchmesser des Filterkörpers und die Differenz dieser beiden Durchmesser in Fließrichtung zunächst abnimmt und dann zunimmt.

Beim Spritzgießen mit thermoplastischem Kunststoff wird das durch Erhitzen zäh fließende Medium einer Spritzdüse zugeführt und von dieser in eine angesetzte Spritzform getrieben. Verunreinigungen des Mediums, zum Beispiel durch Metallsplitter, können die Spritzdüse versperren und das kann zu fehlerhaften Spritzteilen führen.

Bei Schmutzfiltern der eingangs genannten Art verklemmen sich die Schmutzteilchen im zuströmseitigen Teil des Sperrkörpers zwischen dem Sperrkörper und der Wandung des Filterraums und werden dadurch zurückgehalten.

Bei einem bekannten Schmutzfilter der eingangs genannten Art ist der Sperrkörper eine Kugel und der Filterraum hat etwa die Form eines Ellipsoids, dessen größere Achse sich in Richtung der Flußachse erstreckt. Die Kugelform des Sperrkörpers bietet dem anströmenden thermoplastischen Medium durch die erforderliche Umlenkung unerwünschten Widerstand. Die Filterwirkung ist bei diesem bekannten Filter nicht veränderbar, auch nicht durch Austausch der Sperrkugel gegen eine zum Beispiel kleinere Sperrkugel, weil diese dann nicht die für eine ordentliche Filterung erforderliche Stellung innerhalb des Filterraums einnimmt.

Aufgabe der Erfindung ist es, bei einem Filter der eingangs genannten Art den unvermeidlichen Strömungswiderstand möglichst klein zu halten und Verstellbarkeit der Filterwirkung durch Austausch des Sperrkörpers gegen einen anders bemessenen zu ermöglichen.

Die Erfindung ist dadurch gekennzeichnet, daß der in Richtung der Flußachse gemessene Längsdurchmesser des Sperrkörpers größer ist als der größte quer dazu gemessene Querdurchmesser des Sperrkörpers ; daß der Sperrkörper die Grundform zweier mit ihrer Basis aufeinanderstehender Konusse hat ; daß die beiden Enden des Sperrkörpers abgerundet sind ; daß der Sperrkörper an seinem Umfang entlang der aneinanderstoßenden Basisflächen abgerundet ist ; daß am Gehäuse befestigte in den Filterraum ragende Stützlamellen vorgesehen sind, die auf den Umfang verteilt angeordnet sind ; daß die Stützlamellen sich nur über einen kleinen Bereich des Sperrkörpers erstrecken, und daß der Sperrkörper zur Flußachse zentriert an den Stützlamellen anliegend passend bemessen ist.

Das zuströmseitige Ende des Sperrkörpers ist spitzer als bei einer Kugel und bietet daher der anstehenden Strömung weniger Widerstand. Diejenigen Teile des Sperrkörpers, die nicht mit den Stützlamellen in Berührung geraten, können, ohne die Zentrierung der Stützlamellen zu beeinflussen, in unterschiedlicher Weise geformt sein. Es können also unterschiedlich geformte Sperrkörper bereitgestellt sein, die alle durch die gleichen Stützlamellen zentriert werden. Durch Austausch dieser Sperrkörper kann die Filterwirkung verstellt werden.

Für eine sichere Zentrierung genügen Stützlamellen, die sich nur über beide Endbereiche des Sperrkörpers erstrecken, so daß eine dazwischen gelegener mittlerer Bereich des Sperrkörpers unabhängig von den Stützlamellen geformt sein kann. Der freigelassene mittlere Bereich erstreckt sich vorzugsweise mindestens über 1/3 des Längsdurchmessers des Sperrkörpers.

Es empfiehlt sich, im Bereich des zuströmseitigen Konus des Sperrkörpers eine Schmutzsammeltasche auszusparen. Zu diesem Zweck wird vorzugsweise die Fläche des freien Strömungsquerschnittes im Filterraum, von der Fläche des Strömungsquerschnittes in der Zuleitung ausgehend, in Strömungsrichtung größer und verengt sich anschließend auf den engen Querschnitt im Bereich des größten Querdurchmessers.

Eine solche Schmutzsammeltasche bewirkt, daß der zwischen den sich ablagernden Schmutzteilchen noch verbleibende freie Strömungsquerschnitt allzuschnell auf ein unzuträgliches Maß durch die sich zunehmend ablagernden Schmutzteilchen eingeengt wird.

Viele der hier in Frage stehenden Medien werden vor dem Ausspritzen durch Expansion entgast. Eine solche Entgasung wird zweckmäßig vor dem Schmutzfilter vorgenommen. Eine Weiterbildung der Erfindung gestattet es mit sehr geringem Zusatzaufwand, im Bereich des Filters eine wünschenswerte zusätzliche Nachentgasung vorzusehen. Diese Weiterbildung ist Gegenstand der Ansprüche 5 und 6.

Für die Filterwirkung wie auch für die Erzeugung der erwähnten Schmutzsammeltasche und des Expansionsraums kommt es auf die Außenform des Sperrkörpers im Verhältnis zur Innenwand des Filterraums an. Im einfachsten Fall handelt es sich dabei zwischen den abgerundeten Flächen um Kreiskegelmantelflächen, wie es Gegenstand des Anspruchs 7 ist. Durch ballige oder eingeschnürte Deformierung dieser Kreiskegelmantelflächen des Sperrkörpers und/oder des Filterraums kann der Verlauf der Querschnittsfläche in Durchflußrichtung den jeweiligen Anforderungen entsprechend gestaltet werden.

Es ist nicht erforderlich aber wünschenswert, den Sperrkörper spiegelsymmetrisch auszugestalten, so daß er nicht falsch herum eingesetzt werden kann.

Die Erfindung wird nun anhand der beigefügten Zeichnung näher erläutert.

In der Zeichnung zeigt :

Figur 1 ein Schmutzfilter im Längsschnitt,

Figur 2 einen vergrößerten Ausschnitt aus Figur 1,

Figur 3 ein Flächendiagramm über den Verlauf des freien Querschnitts innerhalb des Filterraums zu Fig. 2,

Figur 4 das Schmutzfilter aus Figur 1, jedoch mit einem anders geformten Sperrkörper in der Ansicht entsprechend Fig. 2, und

Figur 5 ein Flächendiagramm entsprechend Fig. 3 zu Fig. 4.

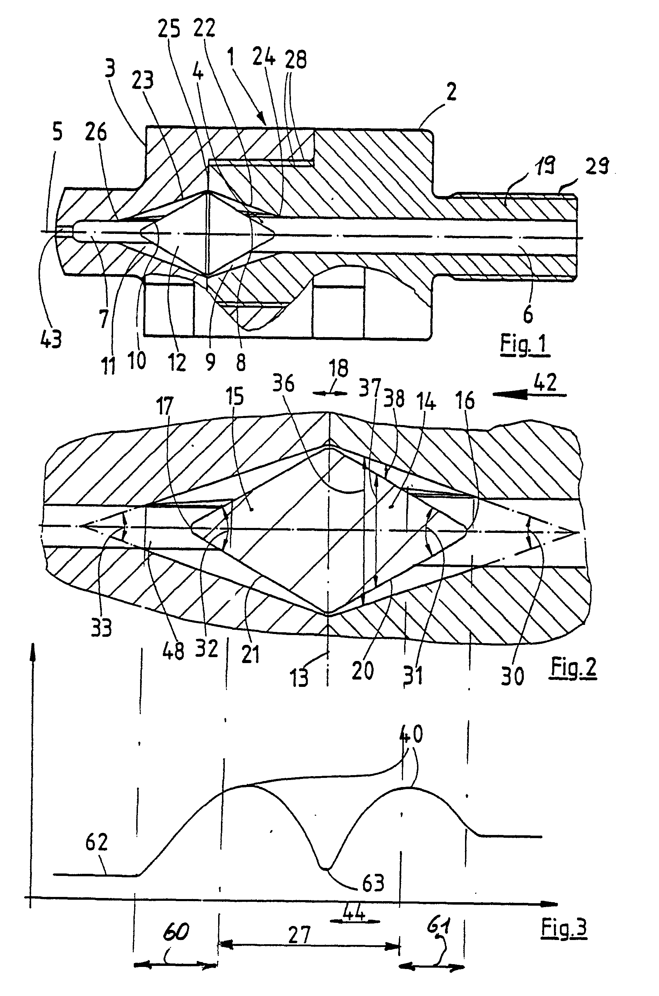

Gemäß Figur 1 ist mit 1 das Filtergehäuse bezeichnet, das aus zwei Teilen, einem Anschlußteil 2 und einem Düsenteil 3, besteht. Innerhalb des Filtergehäuses 1 ist ein Filterraum 4 ausgespart, in den koaxial zur Flußachse 5 eine ausgesparte Zuleitung 6 und dieser gegenüber eine ausgesparte Ableitung 7 mündet. In dem Filterraum 4 sitzt zentriert durch jeweils drei auf den Umfang verteilt angeordnete Stützlamellen 8 bis 11 ... ein Sperrkörper 12. Filterraum 4, Zuleitung 6, Ableitung 7 und Sperrkörper 12 sind, abgesehen von den Stützlamellen, rotationssymmetrisch zur Flußachse 5 ausgestaltet. Der Filterraum 4 hat glatte Innenwände und der Sperrkörper 12 eine glatte Außenwand. Eine Anschlußmuffe 19 des Anschlußteils 2 ist mit Außengewinde 29 versehen, um das Gehäuse an einer nicht dargestellten Spritzmaschine anzuschrauben.

Der Sperrkörper 12 hat die Grundform zweier Konusse 14, 15, die an der Mittelebene 13 mit ihrer Basis aufeinanderstehen. Die beiden Enden 16, 17 des Sperrkörpers 12 sind abgerundet. Außerdem ist der Sperrkörper in seinem weitesten Umfangsbereich 18 entlang der Mittelebene 13 abgerundet. Abgesehen von diesen Abrundungen ist der Sperrkörper durch die Mantelflächen 20, 21 zweier Kreiskegel begrenzt. Auch die Innenwandungen 22, 23 des Filterraums 4 haben die Form zweier Kreiskegelmantelflächen mit Abrundungen entlang der Übergangskanten 24, 25, 26. Die Öffnungswinkel der zugehörigen Kreiskegelflächen sind durch Doppelpfeile 30, 31, 32, 33 angezeigt. Die Öffnungswinkel 30, 33 für die dem Innenraum zugeordneten Kreiskegel können unter sich gleich sein und sind beide kleiner als die Öffnungswinkel 31, 32 der dem Sperrkörper zugeordneten Kreiskegel.

Der Sperrkörper 12 ist spiegelsymmetrisch zu der senkrecht zur Flußachse 5 gelegenen Mittelebene 13. Auf diese Weise ist sichergestellt, daß der Sperrkörper nicht versehentlich mit falscher Orientierung eingesetzt werden kann.

Die Stützlamellen 8 bis 11 erstrecken sich, bezogen auf die Flußachse 5, nur über einen kleinen Bereich 60 beziehungsweise 61 des Sperrkörpers. Dieser Bereich ist bei allen Ausgestaltungen des Sperrkörpers der gleiche, so daß der Sperrkörper zur Flußachse zentriert in diese Stützlamellen paßt. Der dazwischen gelegene Oberflächenbereich 27 kann auch anders gestaltet sein, denn er nimmt an der Zentrierung des Sperrkörpers nicht teil. Dieser Bereich 27 erstreckt sich nach Figur 1 bis 3 etwa über 4/5 des Längsdurchmessers des Sperrkörpers. Er erstreckt sich vorzugsweise mindestens über 1/3 des Längsdurchmessers des Sperrkörpers.

Das Medium strömt in Pfeilrichtung 42 unter Druck aus der Zuleitung 6 durch den ringförmigen freien Querschnitt innerhalb des Filterraums 4 in die Ableitung 7 und wird aus der Düse 43 ausgetrieben. Das Gehäuse 1 kann, um das thermoplastische Medium ausreichend fließfähig zu halten, von außen beheizt sein oder mit nicht dargestellten Heizregistern ausgestattet sein.

Entlang der Mittelebene 13 ist das Gehäuse 1 geteilt. Die beiden Gehäuseteile — das Anschlußteil 2 und das Düsenteil 3 — sind nach Art einer Schraubmuffe entlang der Gewinde 28 miteinander lösbar verschraubt. Zum Reinigen des Filterraumes 4 oder aber zum Austausch des Sperrkörpers 12 gegen einen anderen Sperrkörper wird das Gehäuse durch Abschrauben des Düsenteils 3 vom Anschlußteil 2 geöffnet.

Der Innendurchmesser 36 des Filterraums, gemessen senkrecht zur Flußachse 5, ist überall größer als der entsprechend auf gleicher axialer Höhe gemessene Außendurchmesser 37 des Sperrkörpers. Die Differenz 38 zwischen dem Innendurchmesser 36 des Filterraums 4 und dem Außendurchmesser 37 des Sperrkörpers 12, nimmt, beginnend beim Ende 16 in Fließrichtung zunächst ab, hat in der Mittelebene 13 ihren kleinsten Wert und nimmt dann wieder zu. Die Querschnittsfläche F des freien Strömungsquerschnittes, gemessen senkrecht zur Strömungsrichtung, ist in Figur 3 über die Länge L als Kennlinie 62 des Filters aufgetragen mit räumlicher Zuordnung zu Figur 2. Danach nimmt die Fläche F zunächst im Bereich des Endes 16 etwas zu und verringert sich dann bis auf einen Minimalwert 63 auf der Höhe der Mittelebene 13. Anschließend vergrößert sich wieder die Fläche F und erreicht ein Maximum 40 und verringert sich dann auf den Querschnitt der Ableitung 7, der etwas kleiner ist als der Querschnitt der Zuleitung 6. Dem überlagern sich zwei Sattel bedingt durch das Volumen der Stützlamellen 8 bis 11.

Die Schmutzteilchen, die den engsten Querschnitt im Bereich 18 nicht passieren können, werden in dem Fangbereich 44 zurückgehalten und klemmen sich dort zwischen Sperrkörper 12 und Innenwand 22 ein. Dadurch wird in diesem Bereich aber der freie Strömungsquerschnitt zunehmend eingeengt.

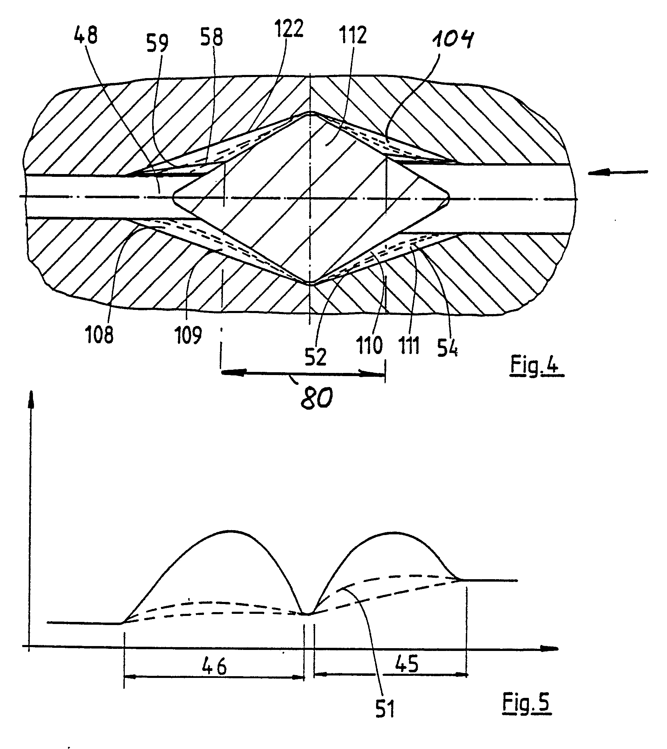

Bei dem in Figur 4 und 5 dargestellten Ausführungsbeispiel wird in diesem Bereich entsprechend dem Kennlinienabschnitt 45 eine Schmutzsammeltasche erzeugt. Dadurch steht für den sich ablagernden

**0 156 925**

Schmutz mehr Platz zur Verfügung und das Filter bleibt länger funktionsbereit.

Diese Schmutzsammeltasche erzielt man durch die eingeschnürte Ausgestaltung des Sperrkörpers 112 oder durch eine eingeschnürte Ausgestaltung der Wandung 122 des Filterraums 104. Durch eine ballige Ausgestaltung von Sperrkörper beziehungsweise Wandung des Filterraums entsprechend den strichpunktierten Linien 58, 59 wird die gegenteilige Wirkung erzielt.

Auf der Abströmseite wird durch das Maximum 40 nach Figur 3 ein kleiner Expansionsraum gebildet. Dieser ist nach Figur 4 und 5 noch verstärkt entsprechend dem Kennlinienabschnitt 46. In diesen Expansionsraum mündet eine nach außen führende Entgasungsleitung. Es können auch mehrere, auf den Umfang verteilt angeordnete Entgasungsleitungen vorgesehen sein, die in diesen Expansionsraum 48 münden und das dort durch die Expansion noch freiwerdende Gas abströmen lassen.

Die Vergrößerung des Expansionsraums entsprechend dem Kennlinienabschnitt 46 ist durch eine gegenüber Figur 2 eingeschnürte Ausgestaltung des Filterraums 104 herbeigeführt worden. Man kann auch noch eine weitere Expansionskammer entsprechend dem Kennlinienabschnitt 51 vorsehen durch eine entsprechende eingeschnürte Ausgestaltung des Sperrkörpers beziehungsweise der Innenwandung 23 des Filterraums entsprechend den strichpunktierten Linien 52. Gegenteilige Wirkung erzielt man durch eine ballige Ausgestaltung entsprechend den strichpunktierten Linien 54.

Man kann auch den engsten Filterquerschnitt im Bereich der Mittelebene 13 erweitern, indem man den Sperrkörper 12 aus Figur 4 mit einem kleineren Durchmesser ausgestaltet.

Da der Oberflächenbereich 27 beziehungsweise 80 des Sperrkörpers 12 beziehungsweise 112 nicht an der Zentrierung durch die Lamellen 8 bis 11 ... beziehungsweise 108 bis 111 ... teilnimmt, können Sperrkörper, die hinsichtlich des Oberflächenbereichs 27 beziehungsweise 80 unterschiedlich ausgestaltet sind, wahlweise in ein und dasselbe Filtergehäuse eingesetzt werden. Man kann so durch Austausch des Sperrkörpers die Charakteristik des Filters dem jeweils gewünschten Zweck anpassen. Die auf der Strömung zugekehrten Seite angeordneten Stützlamellen 8, 9 ... beziehungsweise 108, 109 ... können bei entsprechend breiter Ausgestaltung der übrigen Stützlamellen auch entfallen.

Bevorzugte Abmessungen des Ausführungsbeispiels nach Figur 1 bis 3 und einiger Abhänderungen, die entsprechend auch für das Ausführungsbeispiel nach Figur 4 und 5 anwendbar sind, ergeben sich aus der nachfolgenden Tabelle.

Tabelle

| Bevorzugte Abmessungen | Figur 1, 2 und 3 | Abänderung 1 | Abänderung 2 |
|---|---|---|---|
| Öffnungswinkel 30 | 19° | 28° | 24° |
| Öffnungswinkel 31 | 30° | 30° | 30° |
| Öffnungswinkel 32 | 30° | 30° | 30° |
| Öffnungswinkel 33 | 19° | 28° | 24° |
| Längsdurchmesser des Sperrkörpers 12 | 40,5 | 44 | 51 |
| Größter Querdurchmesser des Sperrkörpers 12 | 24 | 26 | 30 |
| Durchmesser der Zuleitung 6 | 10 | 12 | 16 |
| Durchmesser der Ableitung 7 | 6 | 8 | 12 |
| Durchmesser des Filterraums 4 in der Mittelebene 13 | 25 | 27 | 31 |
| Länge des Bereichs 27 | 29 | 28,5 | 29 |

4

0 156 925

**Patentansprüche**

1. Schmutzfilter für zäh fließfähige, thermoplastische Medien mit einem in einem Gehäuse (1) ausgesparten Filterraum (4, 104), in dem ein Sperrkörper sitzt; mit einer im Gehäuse ausgesparten Zuleitung (6), die mit kreisrundem Querschnitt koaxial zu einer Flußachse in den Filterraum mündet; mit einer im Gehäuse ausgesparten Ableitung, die mit kreisrundem Querschnitt koaxial zur Flußachse auf der der Mündung der Zuleitung gegenüberliegenden Seite vom Filterraum ausgeht; wobei der Filterraum und der Sperrkörper (12, 112) rotationssymmetrisch zur Flußachse und glatt ausgestaltet sind und wobei der Innendurchmesser des Filterraums, gemessen senkrecht zur Flußachse, überall größer ist als der entsprechend auf gleicher axialer Höhe gemessene Außendurchmesser des Filterkörpers und die Differenz dieser beiden Durchmesser in Fließrichtung zunächst abnimmt und dann zunimmt, dadurch gekennzeichnet, daß der in Richtung der Flußachse (5) gemessene Längsdurchmesser des Sperrkörpers (12, 112) größer ist als der größte quer dazu gemessene Querdurchmesser des Sperrkörpers; daß der Sperrkörper die Grundform zweier mit ihrer Basis aufeinanderstehender Konusse hat; daß die beiden Enden (16, 17) des Sperrkörpers abgerundet sind; daß der Sperrkörper an seinem Umfang (18) entlang der aneinanderstoßenden Basisflächen abgerundet ist; daß am Gehäuse (1) befestigte, in den Filterraum (4,104) ragende Stützlamellen (8-11; 108-111) vorgesehen sind, die auf den Umfang verteilt angeordnet sind; daß die Stützlamellen sich nur über einen kleinen Bereich (60, 61) des Sperrkörpers erstrecken, und daß der Sperrkörper zur Flußachse (5) zentriert an den Stützlamellen anliegend passend bemessen ist.

2. Schmutzfilter nach Anspruch 1, dadurch gekennzeichnet, daß für beide Enden (16, 17) des Sperrkörpers (12, 112) mindestens je drei Stützlamellen (8, 9 ...; 10, 11 ...; 108, 109 ...; 110, 111 ...) vorgesehen sind, die einen bezogen auf den Längsdurchmesser, mittleren Bereich (27) des Sperrkörpers (12, 112), der sich mindestens über 1/3 des Längsdurchmessers des Sperrkörpers erstreckt, freilassen.

3. Schmutzfilter nach Anspruch 1 oder 2, dadurch gekennzeichnet, daß die Fläche des freien Strömungsquerschnittes im Bereich (18) des größten Querdurchmessers die kleinste im Filterraum (4, 104) ist und auch kleiner ist als die der Zuleitung (6) und die der Ableitung (7).

4. Schmutzfilter nach einem der vorhergehenden Ansprüche, dadurch gekennzeichnet, daß im Bereich des zuströmseitigen Konus (14) des Sperrkörpers (12, 112) eine Schmutzsammeltasche (45) ausgespart ist, indem die Fläche des freien Strömungsquerschnittes im Filterraum (4, 104) von der Fläche des Strömungsquerschnittes in der Zuleitung (6) ausgehend in Strömungsrichtung größer wird und sich dann auf den engen Querschnitt im Bereich (18) des größten Querdurchmessers verengt.

5. Schmutzfilter nach einem der vorhergehenden Ansprüche, dadurch gekennzeichnet, daß im Bereich des abströmseitigen Konus (15) des Sperrkörpers (12, 112) ein Expansionsraum (51) ausgespart ist, indem der freie Strömungsquerschnitt sich, ausgehend vom engsten Querschnitt im Bereich (18) des größten Querdurchmessers, zunächst erweitert auf einen freien Strömungsquerschnitt größer als der der Ableitung (7) und dann verengt auf den der Ableitung.

6. Schmutzfilter nach Anspruch 5, dadurch gekennzeichnet, daß in den Expansionsraum (51) mindestens eine ins Freie führende Entgasungsleitung (47) mündet.

7. Schmutzfilter nach einem der vorhergehenden Ansprüche, dadurch gekennzeichnet, daß die beiden Konusse (14, 15) des Sperrkörpers (12, 112) im Bereich zwischen den Abrundungen durch Kreiskegelmantelflächen (20, 21) begrenzt sind, und daß die diesen gegenüberliegenden Wandflächen (22, 23, 122) des Filterraums (4, 104) ebenfalls durch Kreiskegelmantelflächen gebildet sind, wobei jedoch die Öffnungswinkel (31, 32) der dem Sperrkörper (12, 112) zugeordneten Kreiskegel größer sind als die Öffnungswinkel (30, 33) der dem Filterraum (4, 104) zugeordneten Kreiskegel.

8. Schmutzfilter nach Anspruch 7, gekennzeichnet durch eine ballige oder eingeschnürte Deformation einer Kreiskegelmangelfläche (20, 21) des Sperrkörpers (12, 112).

9. Schmutzfilter nach Anspruch 7 oder 8, gekennzeichnet durch eine ballige oder eingeschnürte Deformation einer Wfandfläche (22, 23) des Filterraums (4, 104).

10. Schmutzfilter nach einem der vorhergehenden Ansprüche, gekennzeichnet durch eine spiegelsymmetrische Ausgestaltung des Sperrkörpers (12, 112) bezogen auf eine zum längsdurchmesser des Sperrkörpers senkrecht gelegene Spiegelsymmetrieebene (13).

**Claims**

1. Dirt filter for viscous flowable, thermoplastic media with a filter chamber (4, 104) hollowed out of a casing (1) and in which is located a blocking member; with a feed line (6) hollowed out of the casing and which issues with circular cross-section coaxially to a flow axis into the filter chamber; with a drain line hollowed out of the casing and which with a circular cross-section discharges coaxially to the flow axis on the side of the filter chamber opposite to the opening of the feed line; the filter chamber and blocking member (12, 112) being rotationally symmetrical to the flow axis and smooth; and the internal diameter of the filter chamber, measured at right angles to the flow axis, is every where larger than the corresponding external diameter of the filter pad measured at the same axial height and the difference of these two diameters initially decreases and the increases in the flow direction, characterized in that the longitudinal diameter of the blocking member (12, 112) measured in the direction of the flow axis (5) is larger than the

5

**0 156 925**

greatest transverse diameter of the blocking member measured at right angles thereto ; that the blocking member has the basic shape of two cones having superimposed bases ; that the two ends (16, 17) of the blocking member are rounded ; that the circumference (18) of the blocking member is rounded along the abutting base surfaces ; that there are support lamellas (8-11) ; (108-111) projecting into filter chamber (4, 104) and fixed to casing (1) and which are distributed around the circumference ; that the support lamellas only extend over a small region (6, 61) of the blocking member ; and that the blocking member is centered with respect to the flow axis (5) and engages and is appropriately dimensioned with respect to the support lamellas.

2. Dirt filter according to claim 1, characterized in that for both ends (16, 17) of blocking member (12, 112) there are in each case at least three support lamellas (8, 9 ... ; 10, 11 ... ; 108, 109 ... ; 110, 111 ...) which, based on the longitudinal diameter, leave free a central region (27) of the blocking member (12, 112) extending over at least 1/3 of the longitudinal diameter of the blocking member.

3. Dirt filter according to claims 1 or 2, characterized in that the surface of the free flow cross-section in the vicinity (18) of the largest transverse diameter is the smallest in filter chamber (4, 104) and is also smaller than that of the feed line (6) and drain line (7).

4. Dirt filter according to one of the preceding claims, characterized in that in the vicinity of the inflow-side cone (14) of blocking member (12, 112) is hollowed out a dirt collecting pocket (45), the surface of the free flow cross-section in filter chamber (4, 104) starting from the surface of the flow cross-section in the feed line (6) is greater in the flow direction and then is constricted to the narrow cross-section in the vicinity (18) of the largest transverse diameter.

5. Dirt filter according to one of the preceding claims, characterized in that in the vicinity of the out flow-side cone (15) of blocking member (12, 112) an expansion chamber (51) is hollowed out and, starting from the narrowest cross-section in the vicinity (18) of the largest transverse diameter, the free flow cross-section is initially widened to a free flow cross-section larger than that of the drain line (7) and then constricts to that of the drain line.

6. Dirt filter according to claim 5, characterized in that at least one venting line (47) leading into the open issues into expansion chamber (51).

7. Dirt filter according to one of the preceding claims, characterized in that the two cones (14, 15) of blocking member (12, 112) are bounded in the area between the rounded portions by circular conical surfaces (20, 21), that the wall surfaces (22, 23, 122) of the filter chamber (4, 104) facing the same are also formed by circular conical surfaces, but the opening angles (31, 32) of the circular cones associated with the blocking members (12, 112) are larger than the opening angles (30, 33) of the circular cones associated with filter chamber (4, 104).

8. Dirt filter according to claim 7, characterized by a spherical or necked-down deformation of a circular conical surface (20, 21) of the blocking member (12, 112).

9. Dirt filter according to claims 7 or 8, characterized by a spherical or necked-down deformation of one wall surface 22, 23 of filter chamber (4, 104).

10. Dirt filter according to one of the preceding claims characterized by a mirror symmetrical construction of the blocking member (12, 112) relative to a mirror symmetry plane (13) at right angles to the longitudinal diameter of the blocking member.

**Revendications**

1. Filtre d'impuretés pour milieux visqueux thermoplastiques avec chambre de filtre (4, 104) logée dans un évidement pratiqué dans un carter (1), à savoir une chambre dans laquelle est placée une barrière en dur ; avec une conduite d'amenée (6) logée dans un évidement du carter, conduite d'amenée dont la section transversale est circulaire, conduite d'amenée qui débouche dans la chambre du filtre et dont l'axe coïncide avec l'axe du fluide qui s'écoule ; avec une conduite de dérivation, logée dans un évidement pratiqué dans le carter, conduite de dérivation dont la section transversale est circulaire et dont l'axe coïncide avec l'axe du fluide qui s'écoule et qui part de la chambre du filtre, du côté qui fait face à l'embouchure de la conduite d'amenée ; tandis que la chambre du filtre et la barrière en dur (12, 112) sont lisses et symétriques par rapport à l'axe du fluide qui s'écoule, cette symétrie rappelant celle d'un corps de révolution et tandis que le diamètre intérieur de la chambre du filtre, mesuré verticalement par rapport à l'axe du fluide qui s'écoule est partout plus grand que le diamètre extérieur du corps du filtre, ce diamètre étant mesuré verticalement d'une manière correspondante, à hauteur axiale égale et tandis que la différence entre les deux diamètres dans la direction de l'écoulement, diminue d'abord pour augmenter ensuite, caractérisé par le fait que le diamètre longitudinal de la barrière en dur (12, 112), mesuré dans la direction de l'axe du fluide qui s'écoule (5) est plus grand que le plus grand diamètre transversal de la barrière en dur, diamètre mesuré transversalement à celui-ci ; que la barrière en dur a fondamentalement la forme de deux cônes qui se touchent par leur base ; que les extrémités (16, 17) de la barrière en dur sont arrondies ; que la barrière en dur est arrondie à sa périphérie (18) le long des surfaces de base qui se touchent ; qu'il est prévu des lamelles de soutien (8, 11 ; 108, 111) fixées au carter (1) et s'élevant dans la chambre (4, 104) du filtre, ces lamelles de soutien étant disposées de manière à être réparties à la périphérie ; que les lamelles de soutien ne s'étendent que sur une faible zone (60, 61) de la barrière en dur

6

et que la barrière en dur, centrée par rapport à l'axe du fluide qui s'écoule (5) et contiguë aux lamelles de soutien, est dimensionnée d'une manière adéquate.

2. Filtre d'impuretés, conforme à la revendication 1, caractérisé par le fait que pour les deux extrémités (16, 17) de la barrière en dur (12, 112), trois lamelles de soutien au moins, sont chaque fois prévues, à savoir les lamelles de soutien (8, 9.. ; 108, 109.. ; 110, 111) qui libèrent la zone moyenne (27) de la barrière en dur (12, 112) laquelle zone moyenne rapportée au diamètre longitudinal s'étend sur 1/3 au moins du diamètre longitudinal de la barrière en dur.

3. Filtre d'impuretés, conforme à la revendication 1 ou 2, caractérisé par le fait que, dans la zone (18) du diamètre transversal, le plus grand, la surface de la section transversale libre du fluide qui s'écoule est la plus petite dans la chambre (4, 104) du filtre et qu'elle est également plus petite que celle de la conduite d'amenée (6) et celle de la conduite de dérivation (7).

4. Filtre d'impuretés conforme à une des revendications précédentes, caractérisé par le fait que, dans la zone du cône (14) de la barrière en dur (12, 112) du côté où afflue en abondance le fluide qui s'écoule, il est évidé une poche collectrice d'impuretés (45), tandis que la surface de la section transversale libre du flux qui s'écoule, laquelle surface située dans la chambre (4, 104) du filtre partant de la surface de la section transversale du flux qui s'écoule dans la conduite d'amenée (6) est plus grande dans la direction du flux qui s'écoule et se rétrécit ensuite de manière à présenter une section transversale étroite dans la zone (18) du plus grand diamètre transversal.

5. Filtre d'impuretés, conforme à une des revendications précédentes, caractérisé par le fait que dans la zone du cône (15) de la barrière en dur (12, 112) du côté où le flux s'écoule en abondance, en s'éloignant rapidement, il a été évidé une chambre d'expansion (51) tandis que la section transversale libre du flux qui s'écoule, laquelle section part de la section transversale la plus étroite, située dans la zone (18) du plus grand diamètre transversal, s'élargit d'abord de manière à présenter une section transversale libre du flux qui s'écoule en abondance, plus grande que celle de la conduite de dérivation (7) et se rétrécit ensuite de manière à présenter celle de la conduite de dérivation (7).

6. Filtre d'impuretés, conforme à la revendication 5, caractérisé par le fait qu'au moins une conduite de dégazage (47), aboutissant en plein air, débouche dans la chambre (51) d'expansion.

7. Filtre d'impuretés, conforme à une des revendications précédentes, caractérisé par le fait que les deux cônes (14, 15) de la barrière en dur (12, 112) sont limités dans la zone des arrondis par des surfaces latérales de manteau (20, 21) de cônes de révolution dans la zone comprise entre les arrondis ; que les surfaces des parois (22, 23, 122) faisant face aux précités sont également conformées par des surfaces latérales de manteau de cônes de révolution tandis que les angles d'ouverture (31, 32) des cônes de révolution adjoints à la barrière en dur (12, 112) sont plus grands que les angles d'ouverture (30, 33) des cônes de révolution adjoints à la chambre (4, 104) du filtre.

8. Filtre d'impuretés, conforme à la revendication 7, caractérisé par une déformation de la surface latérale du manteau d'un cône de révolution (20, 21) de la barrière en dur (12, 112), cette déformation se présentant sous la forme d'un bombement ou d'un rétrécissement.

9. Filtre d'impuretés, conforme à la revendication 7 ou 8, caractérisé par une déformation d'une surface de paroi (22, 23) de la chambre (4, 104) du filtre, cette déformation se présentant sous la forme d'un bombement ou d'un rétrécissement.

10. Filtre d'impuretés, conforme à une des revendications précédentes, caractérisé par une conformation symétrique spéculaire de la barrière en dur (12, 112), cette symétrie rappelant celle d'un objet et de son image dans un miroir, laquelle conformation est rapportée à un plan de symétrie spéculaire, perpendiculaire au diamètre longitudinal de la barrière en dur.

Fig. 1

Fig. 2

Fig. 3

Fig.4

Fig.5